# FASCICULE DE BREVET EUROPEEN

(11) **EP 0 578 574 B1**
(45) Date de publication et mention de la délivrance du brevet: **11.09.1996**
(21) Numéro de dépôt: 93401769.0
(22) Date de dépôt: 07.07.1993
(51) Int. Cl.: A61G 3/02, B61D 23/02

(54) **Dispositif facilitant l'accès à un véhicule ferroviaire**
Verbesserte Einsteigevorrichtung für ein Schienenfahrzeug
Improved access device for a rail vehicle

(30) Priorité: 10.07.1992 FR 9208611
(43) Date de publication de la demande: 12.01.1994
(73) Titulaire: GEC ALSTHOM TRANSPORT SA, 75016 Paris (FR)
(72) Inventeur: Barjolle, Jean-Pierre, F-17000 La Rochelle (FR); Harguindeguy, Patrick, F-17690 Angoueins sur mer (FR)
(74) Mandataire: Fournier, Michel

(56) Documents cités:
- WO-A-80/01266
- BE-A- 363 516
- DE-C- 3 931 361
- NL-A- 9 001 113

## Description

La présente invention concerne un dispositif facilitant l'accès à un véhicule ferroviaire lors des arrêts en station, en particulier pour les personnes ayant des difficultés à se déplacer, les handicapés en fauteuil roulant ou les personnes traînant des bagages à roulettes.

On connaît, par le document FR-A-2 587 667, un dispositif permettant un accès aisé aux véhicules ferroviaires lors des arrêts en station et comportant un seuil et une palette formant passerelle. Le seuil et la palette sont articulés entre deux positions extrêmes : une position repliée pour le roulage du véhicule et une position dépliée pour l'accès au véhicule. En position repliée, le seuil se trouve en position horizontale et constitue une partie du plancher du véhicule. En position dépliée, le seuil et la palette sont inclinés, la palette étant en appui sur le quai.

Du fait de sa constitution et de son fonctionnement, ce dispositif présente, en position dépliée, une pente de l'ordre de 20 %. Ce chiffre élevé n'est plus acceptable, les sociétés ferroviaires tendant à imposer un chiffre maximal de 10 %. En outre, le logement du dispositif dans le véhicule requiert un encombrement vertical important qui impose la découpe du châssis du véhicule. Ceci nuit à la résistance du châssis et par conséquent à la sécurité des voyageurs. Enfin, ce dispositif comporte un seuil articulé qui, au cours du roulement, est source de fuites d'air et pose des problèmes d'étanchéité. Ce dispositif ne peut donc pas être utilisé dans les trains à grande vitesse dont les portes d'accès sont équipées de joints gonflables pour combattre les phénomènes dus aux ondes de pression.

Un dispositif du même genre est également connu par FR-A-2 416 136. Ce dispositif se compose d'une rampe d'accès au véhicule pouvant se déplacer entre une position de retrait dans laquelle sa partie extérieure fait office de marchepied de type classique, et une position de sortie permettant aux personnes handicapées d'accéder au véhicule. Le dispositif comprend également des organes de commande des mouvements de sortie et de retrait de la rampe d'accès. Ce dispositif comporte les mêmes défauts que ceux énumérés pour le document FR-A-2 587 667.

Le document WO-A-80/01266 décrit un dispositif facilitant l'accès à un véhicule conforme au préambule de la revendication 1.

Le dispositif d'accès selon l'invention permet de pallier ces inconvénients. En position dépliée il offre une pente inférieure à 10%. Son encombrement en hauteur est réduit, ce qui permet son logement dans le plancher du véhicule sans découpe du châssis. Il ne comporte pas de seuil articulé, ce qui autorise son emploi dans les trains à grande vitesse.

L'invention a donc pour objet un dispositif facilitant l'accès à un véhicule ferroviaire, comportant une palette mobile entre une position repliée pour laquelle elle est logée sous la face supérieure du plancher du véhicule et une position dépliée pour constituer une passerelle entre le seuil d'entrée du véhicule et un quai, le dispositif comprenant des moyens d'entraînement de la palette disposés dans le plan de la palette, des moyens d'arrêt en translation de la palette en position dépliée et des moyens de basculement de la palette, la palette étant équipée de moyens de retenue limitant la course de la palette en position dépliée, caractérisé en ce que:
- les moyens d'arrêt en translation comprennent une tige disposée transversalement par rapport à la palette,
- la palette comporte un plateau pour constituer ladite passerelle et une partie située dans un plan différent de celui du plateau, la liaison entre le plateau et ladite partie formant une fourchette pour constituer lesdits moyens de retenue lesquels sont susceptible de s'accrocher sur ladite tige, et
- la palette bascule autour des moyens d'arrêt en translation de manière que l'extrémité extérieure de la palette repose sur le quai et que la palette présente avec le seuil d'entrée une continuité sans décalage, le seuil d'entrée restant fixe.

Les moyens d'entraînement peuvent avantageusement être constitués d'un vérin sans tige et à coulisseau mobile par accouplement magnétique.

Les moyens d'entraînement peuvent être reliés à la palette par des biellettes.

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 représente, vue de côté, la palette du dispositif d'accès selon l'invention en position sur un quai de gare,
- la figure 2 est une vue de dessus de la figure 1 avec enlèvement d'une partie du véhicule ferroviaire pour illustrer ses organes d'entraînement,
- la figure 3 est une vue agrandie d'un détail de la figure 1,
- la figure 4 est une vue agrandie d'un détail de la figure 2,
- les figures 5, 6 et 7 sont des vues de côté de la palette du dispositif selon l'invention,
- la figure 8 est une vue de détail de la figure 3.

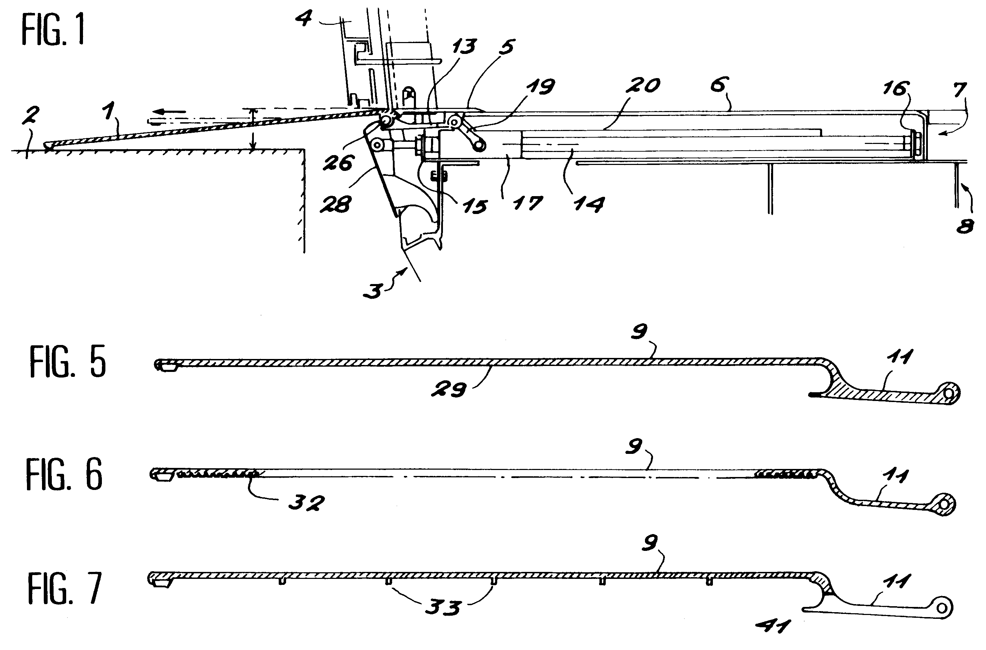

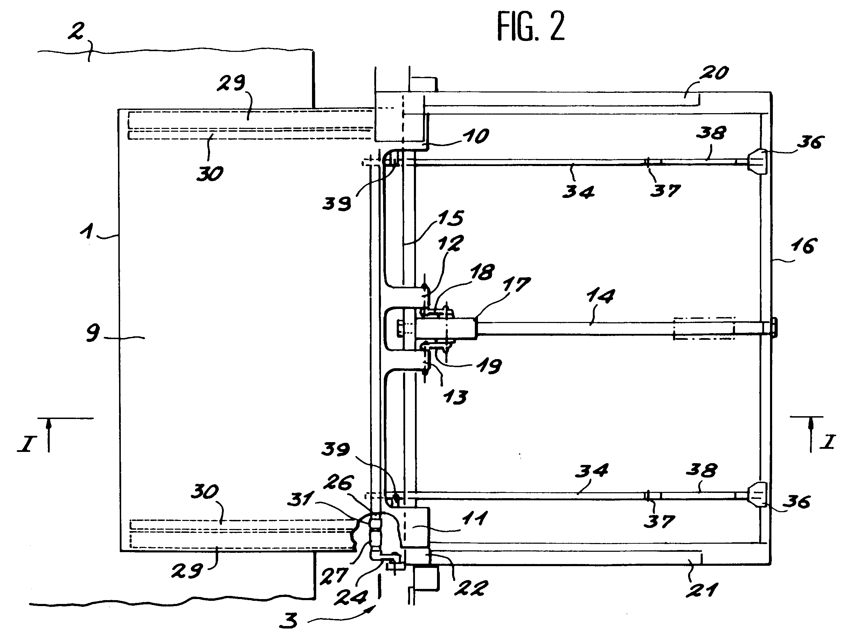

Les figures 1 et 2 montrent la palette 1 complètement déployée, son extrémité extérieure reposant sur le quai 2. Elle donne accès à l'intérieur du véhicule ferroviaire 3 dont on distingue la porte 4 en position ouverte. Comme on peut le voir sur la figure 1, la palette présente avec le seuil d'entrée 5 du véhicule une continuité sans décalage. Le seuil 5 reste fixe et assure la continuité avec la face supérieure 6 du plancher 7 du véhicule. Le plancher repose sur le châssis 8 qui n'est pas découpé, le dispositif selon l'invention se logeant intégralement dans l'épaisseur du plancher.

La palette 1 est constituée, pour sa plus grande partie, d'un plateau rectangulaire 9 dont l'extrémité adjacente au seuil 5, lorsque la palette est complètement déployée, est légèrement incurvée et se prolonge par des éléments latéraux 10 et 11 et par des éléments centraux 12 et 13. Ces éléments latéraux et centraux sont situés dans un plan parallèle et inférieur à celui de la palette 1. Les éléments latéraux 10 et 11 serviront au guidage de la palette. Les éléments centraux 12 et 13 serviront à son entraînement.

L'entraînement de la palette peut être obtenu grâce à un vérin d'entraînement linéaire pneumatique sans tige de piston et avec accouplement magnétique, par exemple du type commercialisé par la société FESTO.

Sur les figures 1 et 2, on distingue le vérin d'entraînement 14 fixé par ses extrémités aux cornières 15 et 16 parallèles à l'axe principal du véhicule. L'axe du vérin 14 est donc perpendiculaire à l'entrée du véhicule. Un coulisseau 17 peut glisser sur le vérin 14 par accouplement magnétique. Les éléments centraux 12 et 13 de la palette 1 encadrent le coulisseau 17. Des biellettes 18 et 19 relient ces éléments centraux au coulisseau.

Le guidage de la palette, pour son déploiement et sa rentrée, se fait le long de glissières 20 et 21 disposées dans le plancher du véhicule. Ces glissières sont ouvertes vers l'intérieur du dispositif pour le roulement de galets 22 (voir la figure 2) et 23 (voir la figure 3) portés extérieurement par les éléments latéraux 10 et 11.

Le dispositif comporte également deux balanciers de chaque côté de la palette et montés sur les montants de l'ouverture de porte. Ces balanciers sont plus visibles sur la figure 3 qui est une vue agrandie de la figure 1. Ils sont mobiles en rotation autour de leur axe 25 de fixation sur les montants de porte. Les balanciers sont réunis par une tige 26 supportant à ses extrémités des roulettes porteuses 27. Lors de son déploiement, la palette sera donc guidée horizontalement par les glissières 20 et 21 et en appui constant sur les roulettes porteuses 27.

La porte du véhicule et la palette peuvent fonctionner simultanément, alternativement ou indépendamment. Toutefois, afin de minimiser les pertes de temps en station, il est préférable que les phases de déplacement porte-palette soient en relation. Lors de l'arrivée en station, on procède à la sortie de la palette puis à l'ouverture de la porte du véhicule, la porte ne libérant le passage que lorsque la palette est posée sur le quai. Au départ de la station, on déclenche la fermeture de la porte puis, lorsque la porte ne permet plus le passage, la palette se rétracte. Ensuite, la porte et la palette achèvent leur course.

La palette est donc mobile entre deux positions extrêmes : une position horizontale lors du déplacement du véhicule et une position inclinée constituant une rampe continue permettant l'accès au véhicule.

Un volet de protection 28 masque totalement la palette et son mécanisme de guidage et d'entraînement lors du déplacement du véhicule.

Lorsque la palette est sortie, elle conserve, grâce aux dégagements des glissières la possibilité d'osciller par rapport à la caisse du véhicule. Ceci permet de ne pas blesser les voyageurs dont les pieds seraient en bordure du quai. Ceci permet également à la caisse de s'abaisser sous l'effet de la montée des voyageurs sans nuire au mécanisme de guidage et d'entraînement. De plus, ce dispositif d'accès est réversible ce qui permet, en cas de panne, de rentrer la palette à la main après isolement pneumatique du moteur de commande du vérin.

Les parties latérales de la palette comportent des zones spécialisées visibles aux figures 2 et 4. Il s'agit des pistes porteuses 29 et des pistes stabilisatrices 30 réalisées sous le plateau 9 de la palette. Les pistes porteuses 29 permettent le roulement de la palette sur les roulettes porteuses 27. Elles sont formées d'une surface plane comme le montre la figure 5 qui est une coupe de la palette selon l'axe V-V de la figure 4. Les pistes 30 et les pignons 31 portés par la tige 26 assurent la stabilisation de la palette lors de ses mouvements de déploiement et de rentrée. Elles sont constituées par des crémaillères 32, engrenant les pignons 31, comme le montre la figure 6 qui est une coupe de la palette selon l'axe VI-VI de la figure 4.

La partie centrale de la palette comporte des raidisseurs 33 comme le montre la figure 7 qui est une coupe de la palette selon l'axe VII-VII de la figure 4.

Le dispositif fonctionne de la manière suivante. Dès l'arrêt en station, le vérin sans tige 14 est alimenté et pousse, par l'intermédiaire du coulisseau 17 et des biellettes 18 et 19, la palette 1 vers l'extérieur du véhicule. La palette se déplace alors horizontalement comme cela est figuré en traits pointillés sur la figure 1. Le volet de protection 28 s'ouvre pour permettre le passage de la palette. L'ouverture du volet 28 est obtenue grâce aux tiges pousseuses 34 (voir les figures 2, 3 et 4) terminées par des roulettes 35. Les tiges pousseuses 34 coulissent dans des trous pratiqués dans la cornière 15 (côté porte du véhicule) et dans des supports 36 (côté intérieur du véhicule). L'extrémité correspondante de chaque tige 34 possède un élément de retenue de manière à retenir la tige. La course possible pour ces tiges est constituée par la distance séparant leur extrémité arrière de la cornière 16. Les tiges possèdent une collerette 37 et un ressort 38 est disposé entre chaque collerette et le support 36 correspondant à la tige. Ainsi les tiges sont soumises à une poussée tendant à provoquer l'ouverture du volet. En position repliée, des butées 39 solidaires de la palette forcent le ressort 38 et provoquent le recul des tiges 34. Un ressort non représenté provoque alors la fermeture du volet 28. En début d'ouverture, les butées 39 libèrent rapidement le ressort 38 et les tiges 34 forcent le volet 28 à s'ouvrir.

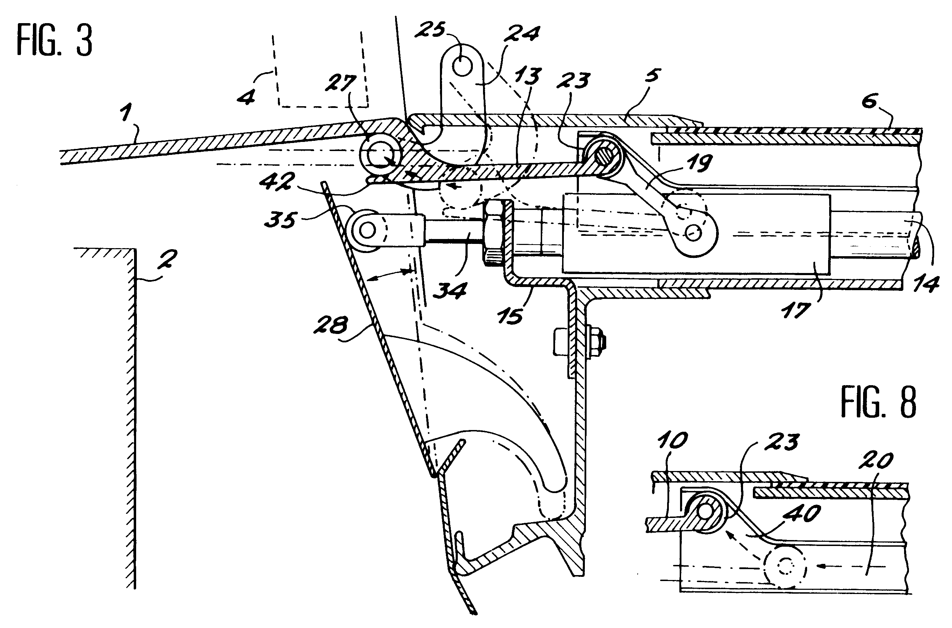

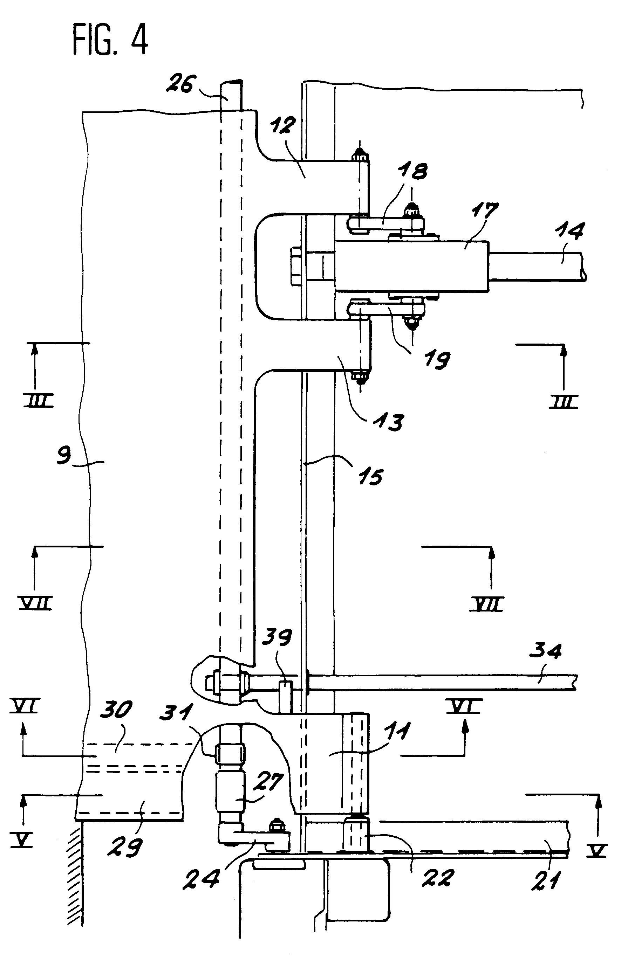

La palette continue de se déplacer horizontalement jusqu'à ce que les galets 22 et 23 arrivent à hauteur des dégagements verticaux terminant les glissières 20 et 21. La figure 8, qui est une vue de détail de la figure 3, illustre cette étape du déploiement de la palette. Dans cette figure, le vérin, le coulisseau, les biellettes et les éléments centraux de la palette n'ont pas été représentés, ce qui permet de voir le galet 23, porté par l'élément latéral 10, dans le dégagement vertical 40 de la glissière 20. A ce moment, la palette s'incline sous l'effet de la gravité. La porte du véhicule s'ouvre pendant que le mécanisme d'entraînement continue à pousser la palette vers l'extérieur.

Les fourchettes de la palette poussent alors la tige 26 ce qui provoque le basculement des balanciers 24. La tige 26 et les balanciers 24 constituent des organes d'arrêt en translation de la palette et permettent son basculement de manière que l'extrémité extérieure de la palette repose sur le quai. On remarque également que la palette présente avec le seuil d'entrée 5 une continuité sans décalage.

Les figures 1, 3, 5 et 7 montrent que les fourchettes de la palette sont constituées par la zone de liaison entre le plateau 9 et les éléments latéraux et centraux 10, 11, 12 et 13, ces éléments latéraux et centraux se prolongeant vers l'avant de la palette par des doigts parallèles au plateau.

Sur la figure 3 on peut voir le doigt 42 correspondant à l'élément central 13 et, sur la figure 7, le doigt 41 correspondant à l'élément latéral 11.

Avant le départ du véhicule, la porte se referme et l'alimentation du vérin est inversée provoquant ainsi l'escamotage de la palette dans le véhicule.

Le dispositif selon l'invention permet de réduire le temps d'embarquement par rapport aux systèmes de passerelle de l'art connu puisque la sortie ou la rentrée de la palette s'effectue en partie pendant la manoeuvre de la porte. On constate que ce dispositif comporte un nombre minimum de pièces en mouvement et de faible masse permettant de réduire la consommation d'énergie. Ceci conduit aussi à une meilleure sécurité pour les personnes et pour le matériel, une fiabilité accrue, une usure et un entretien réduit, une réduction du coût d'exploitation. La manoeuvre manuelle est aisée en cas de marche dégradée. La conception modulaire du dispositif, de type tiroir, permet un remplacement aisé de l'ensemble. On conserve l'accès au véhicule et les manoeuvres de la porte même en cas de palette hors service.

L'implantation du dispositif selon l'invention dans l'épaisseur du plancher apporte un important gain de place sous châssis permettant de mieux répartir les masses des appareils sous châssis. La réduction d'encombrement et la modulabilité offrent des possibilités d'adaptation sur le matériel roulant existant.

L'utilisation d'un vérin sans tige donne un faible encombrement au dispositif, la longueur et la course du vérin étant peu différentes. L'absence de tige réduit la masse en mouvement. La fin de course du vérin se fait sans contact, grâce à la détection magnétique. Ce vérin sans tige permet d'adapter aisément les longueurs et les courses à chaque cas. Les efforts induits à la sortie et à la rentrée de la palette sont équivalents. Il n'y a pas de risque de fuite.

## Revendications

1. Dispositif facilitant l'accès à un véhicule ferroviaire, comportant une palette (1) mobile entre une position repliée pour laquelle elle est logée sous la face supérieure (6) du plancher (7) du véhicule et une position dépliée pour constituer une passerelle entre le seuil d'entrée (5) du véhicule et un quai (2), le dispositif comprenant des moyens d'entraînement de la palette disposés dans le plan de la palette, des moyens d'arrêt en translation de la palette en position dépliée et des moyens de basculement de la palette, la palette étant équipée de moyens de retenue limitant la course de la palette en position dépliée, caractérisé en ce que:
- les moyens d'arrêt en translation comprennent une tige (26) disposée transversalement par rapport à la palette,
- la palette (1) comporte un plateau (9) pour constituer ladite passerelle et une partie (10, 11, 12, 13) située dans un plan différent de celui du plateau, la liaison entre le plateau et ladite partie formant une fourchette pour constituer lesdits moyens de retenue lesquels sont susceptible de s'accrocher sur ladite tige (26), et
- la palette bascule autour des moyens d'arrêt en translation de manière que l'extrémité extérieure de la palette repose sur le quai et que la palette présente avec le seuil d'entrée une continuité sans décalage, le seuil d'entrée restant fixe.

2. Dispositif selon la revendication 1, caractérisé en ce que les moyens d'entraînement comprennent un vérin sans tige (14) et à coulisseau (17) mobile par accouplement magnétique.

3. Dispositif selon l'une quelconque des revendications 1 et 2, caractérisé en ce que les moyens d'entraînement sont reliés à la palette par des biellettes (18, 19).

4. Dispositif selon l'une quelconque des revendications 1 à 3, caractérisé en ce que ladite tige (26) est reliée à des premières extrémités de balanciers (24) dont les secondes extrémités sont mobiles en rotation autour de points fixes (25) par rapport au véhicule.

5. Dispositif selon l'une quelconque des revendications 1 à 4, caractérisé en ce qu'il comporte des moyens de guidage en translation de la palette.

6. Dispositif selon la revendication 5, caractérisé en ce que ces moyens de guidage comprennent des galets (22, 23) portés latéralement par la palette et roulant dans des glissières de guidage (20, 21).

7. Dispositif selon la revendication 6, caractérisé en ce que chaque glissière (20, 21) comporte un dégagement (40) recevant le galet correspondant lors du basculement de la palette.

8. Dispositif selon l'une quelconque des revendications précédentes, caractérisé en ce qu'il comporte un volet (28) d'obturation du logement de la palette et de ses moyens d'entraînement, ce volet s'ouvrant lors du déploiement de la palette.

## Claims

1. A device for facilitating access to a rail vehicle, the device comprising a board (1) that is movable between a retracted position in which it is housed beneath the top face (6) of the floor (7) of the vehicle and an extended position in which it constitutes an access ramp between a platform (2) and an entrance doorsill (5) of the vehicle, the device including drive means for driving the board which means are disposed in the plane of the board, means for stopping translation of the board in its extended position, and tilting means for tilting the board, the board being fitted with retaining means limiting the stroke of the board in its extended position, and the device being characterized in that:
the means for stopping translation movement of the board comprise a rod (26) disposed transversely relative to the board;
the board (1) comprises a plate (9) constituting said access ramp and a portion (10, 11, 12, 13) situated in a plane different from that of the plate, the connection between the plate and said portion forming a fork to constitute said retaining means which are suitable for engaging said rod (26); and
the board tilts about means for stopping the board's movement in translation so that the outside end of the board rests on the platform and so that the board co-operates with the entrance doorsill to provide a continuous surface without any offset, the entrance doorsill remaining stationary.

2. A device according to claim 1, characterized in that the drive means comprise a rodless actuator (14) having a slide (17) that is driven by magnetic coupling.

3. A device according to claim 1 or 2, characterized in that the drive means are connected to the board by links (18, 19).

4. A device according to any one of claims 1 to 3, characterized in that said rod (26) is connected to first ends of rocking arms (24) whose second ends are rotatable about points (25) that are fixed relative to the vehicle.

5. A device according to any one of claims 1 to 4, characterized in that it includes guide means for guiding the board in translation.

6. A device according to claim 5, characterized in that said guide means include wheels (22, 23) carried laterally by the board and running in guiding slideways (20, 21).

7. A device according to claim 6, characterized in that each slideway (20, 21) includes a recess (40) receiving the corresponding wheel when the board tilts.

8. A device according to any preceding claim, characterized in that it includes a flap (28) for closing the housing for the board and its drive means, said flap opening when the board is extended.

## Patentansprüche

1. Vorrichtung zur Erleichterung des Zugangs zu einem Schienenfahrzeug mit einer Rampe (1), die zwischen einer eingefahrenen Stellung, in der sie unter der Oberseite (6) des Bodens (7) des Fahrzeugs untergebracht ist, und einer ausgefahrenen Stellung bewegt werden kann, um als Rampe zwischen der Eingangsschwelle (5) des Fahrzeugs und einem Bahnsteig (2) zu dienen, wobei die Vorrichtung Mittel zur translatorischen Verschiebung der Rampe in deren Ebene, Mittel zum Anhalten der Rampe in der ausgefahrenen Stellung und Mittel zum Kippen der Rampe aufweist und wobei die Rampe Haltemittel enthält, die den Hub der Rampe in der ausgefahrenen Stellung begrenzen, dadurch gekennzeichnet, daß die Mittel zum Anhalten der translatorischen Bewegung eine Stange (26) aufweisen, die quer bezüglich der Rampe angeordnet ist,
- daß die Rampe (1) ein Plateau (9) aufweist, das die eigentliche Rampe bildet, und einen Bereich (10, 11, 12, 13), der in einer anderen Ebene als das Plateau liegt, wobei die Verbindung zwischen dem Plateau und diesem Bereich eine Gabel bildet, die die Haltemittel darstellt, die sich an der Stange (26) einhaken können,
- und daß die Rampe um die Mittel zur translatorischen Verschiebung so schwenkt, daß das äußere Ende der Rampe auf dem Bahnsteig ruht und die Rampe mit der Eingangsschwelle einen stufenlosen Übergang bildet, wobei die Eingangsschwelle fest bleibt.

2. Vorrichtung nach Anspruch 1, dadurch gekennzeichnet, daß die Mittel zur translatorischen Verschiebung der Rampe einen kolbenstangenlosen Zylinder (14) mit einem durch magnetische Kopplung bewegbaren Schieber (17) enthalten.

3. Vorrichtung nach einem beliebigen der Ansprüche 1 und 2, dadurch gekennzeichnet, daß die Mittel zur translatorischen Verschiebung der Rampe mit dieser über Gestänge (18, 19) verbunden sind.

4. Vorrichtung nach einem beliebigen der Ansprüche 1 bis 3, dadurch gekennzeichnet, daß die Stange (26) mit den ersten Enden von Schwenkhebeln (24) verbunden ist, deren zweite Enden um feste Punkte (25) des Fahrzeugs drehbar sind.

5. Vorrichtung nach einem beliebigen der Ansprüche 1 bis 4, dadurch gekennzeichnet, daß sie Mittel zur Führung der translatorischen Bewegung der Rampe aufweist.

6. Vorrichtung nach Anspruch 5, dadurch gekennzeichnet, daß diese Führungsmittel Rollen (22, 23) enthalten, die seitlich von der Rampe getragen werden und in Führungsschienen (20, 21) rollen.

7. Vorrichtung nach Anspruch 6, dadurch gekennzeichnet, daß jede Führungsschiene (20, 21) eine Erweiterung (40) aufweist, die die entsprechende Rolle beim Kippen der Rampe aufnimmt.

8. Vorrichtung nach einem beliebigen der vorhergehenden Ansprüche, dadurch gekennzeichnet, daß sie eine Klappe (28) zum Verschluß des Raums für die Rampe und für ihre Antriebsmittel aufweist, die sich beim Ausfahren der Rampe öffnet.
